# EUROPÄISCHE PATENTSCHRIFT

(11) **EP 3 301 414 B1**
(45) Veröffentlichungstag und Bekanntmachung des Hinweises auf die Patenterteilung: **18.03.2020**
(21) Anmeldenummer: 17194000.0
(22) Anmeldetag: 29.09.2017
(51) Int. Cl.: G01G 21/28, G01G 21/30

(54) **ABDECKHAUBE**
COVER HOOD
COUVERCLE

(30) Priorität: 30.09.2016 DE 202016105471 U
(43) Veröffentlichungstag der Anmeldung: 04.04.2018
(73) Patentinhaber: WIPOTEC GmbH, 67657 Kaiserslautern (DE)
(72) Erfinder: Schulzki, Alexander, 67705 Stelzenberg (DE); Rübel, Andreas, 67737 Olsbrücken (DE)
(74) Vertreter: Eder Schieschke & Partner mbB

(56) Entgegenhaltungen:
- EP-A1- 1 898 192
- DE-U1-202008 014 660

## Beschreibung

Die vorliegende Erfindung betrifft eine Abdeckhaube zur gemeinsamen Abdeckung mehrerer Wägezellengehäuse.

In der industriellen Wägetechnik werden häufig mehrere Wägezellen eng nebeneinander angeordnet, um mittels aufgeteilter Produktströme höhere Produktdurchsätze erzielen oder unterschiedliche Wägeaufgaben kompakt lösen zu können. Ein typischer Fall sind sogenannte Mehrspur-Wägesysteme, bei denen zu wiegende Produkte wie etwa Tabletten auf mehrere Spuren aufgeteilt werden, wobei in jeder Spur jeweils mindestens eine Wägezelle angeordnet ist.

Aus der DE 20 2008 014660 U1 ist eine Wägezellenanordnung und Kontrollwaage bekannt, bei der ein monolithischer Wägeblock von einer schmutzabweisenden Abdeckanordnung umgeben ist, die von einer oberen Scheitellinie seitlich abfallend, vorzugsweise in konvexer Form, ausgebildet ist. Eine Kopplungsanordnung, welche seitlich durch die Abdeckanordnung geführt ist, erlaubt die Einleitung einer Last in den Wägezellenblock. Die EP 1898 192 A1 zeigt eine Wägevorrichtung mit in mehreren Ebenen übereinanderliegenden, versetzt zueinander angeordneten Wägezellen. Die einzelnen Wägezellenebenen sind durch eine als Zwischenboden wirkende Grundplatte voneinander getrennt, wobei die Grundplatte von senkrechten Aussparungen durchsetzt ist, durch welche die Lastaufnehmer der unteren Wägezellen zwischen den oberhalb der Grundplatte angeordneten Wägezellen hindurch nach oben ragen und dadurch zugänglich sind.

Die Anordnung eng zueinander benachbarter Wägezellen bzw. deren Wägezellengehäuse reduziert zwar den für die Anlage erforderlichen Bauraum, die Reinigung der einzelnen Wägezellengehäuse ist jedoch schwierig. Gerade bei der Herstellung von pharmazeutischen Produkten oder Lebensmitteln bestehen besonders hohe Anforderungen an die Sauberkeit in den Fertigungsanlagen, sodass auch die Gehäuse der Wägezellen regelmäßig und gründlich zu reinigen sind. Bei eng aneinander angeordneten Wägezellengehäusen entstehen schmale Spalte zwischen den Gehäusen, die nur schwer zu reinigen sind. Für eine gute Reinigung müssten die Gehäuse entfernt werden, was die vorübergehende Stilllegung einzelner Spuren oder der gesamten Wägeanlage zur Folge hätte und den gewünschten hohen Produktdurchsatz gefährdet.

Aufgabe der Erfindung war es daher, das vorgenannte Problem zu lösen und Mittel bereit zu stellen, welche den Reinigungsaufwand von Mehrspur-Wägesystemen erheblich reduzieren. Die Aufgabe wird gelöst durch eine Abdeckhaube nach Anspruch 1. Weitere vorteilhafte Ausführungsformen ergeben sich aus den Unteransprüchen.

Die Erfindung beruht auf der Erkenntnis, die Ablagerung von Verunreinigungen zwischen benachbarten Wägezellengehäusen zu vermeiden mit Hilfe einer die Wägezellengehäuse gemeinsam schützenden Abdeckhaube. Erfindungsgemäß werden dabei wenigstens zwei Wägezellengehäuse gemeinsam von der Abdeckhaube so abgedeckt, dass der zwischen den Wägezellengehäusen bestehende schmale Zwischenraum gegen Verschmutzung gesichert bzw. abgedeckt ist. Vorzugsweise deckt die Abdeckung alle Wägezellengehäuse gemeinsam ab und schützt die gesamte Wägezellenanordnung vor Verunreinigung.

Eine Wägezelle eines Mehrspur-Wägesystems umfasst in der Regel je ein Wägezellengehäuse mit einer Gehäuseöffnung an der Oberseite des Gehäuses, durch welche ein Lasteinleitungsbolzen in vertikaler Richtung nach oben hinausragt. Der Lasteinleitungsbolzen nimmt im Betrieb der Wägezelle eine zu erfassende Gewichtskraft auf und leitet sie durch die Gehäuseöffnung in das Innere des Wägezellengehäuses weiter, wo die erfasste Kraft über geeignete Sensormittel (elektromagnetische Kraftkompensation mit Monoblocktechnik, Dehnungsmessstreifen, schwingende Saite etc.) in ein weiterzuverarbeitendes Gewichtssignal umgewandelt wird. Die Gehäuseöffnung zur Durchführung des Lasteinleitungsbolzens wird bevorzugt eng an den Lasteinleitungsbolzen angepasst, um das Eindringen von Verunreinigungen oder elektromagnetischer Strahlung in das Innere des Wägezellengehäuses zu vermeiden.

Die erfindungsgemäße Abdeckhaube umfasst ein Oberteil, welches einige oder alle Wägezellengehäuse eines Mehrspur-Wägesystems von oben gemeinsam abdeckt. Das Oberteil enthält für jeden Lasteinleitungsbolzen der abzudeckenden Wägezellengehäuse eine eigene Durchlassöffnung. So lässt sich die Abdeckhaube auf die bestehende Anordnung von nebeneinander positionierten Wägezellengehäusen von oben aufsetzen bzw. überstülpen derart, dass anschließend nur noch die durch die einzelnen Durchlassöffnungen hindurch ragenden Lasteinleitungsbolzen der einzelnen Wägezellen zu sehen bzw. zugänglich sind. Der Rest der Wägezellenanordnung, insbesondere auch die zwischen den einzelnen Wägezellengehäusen bestehenden Spalte oder Zwischenräume, bleiben gegen herabfallende Produktreste oder Verunreinigungen unterhalb des Oberteils bzw. innerhalb der Abdeckhaube vorteilhaft geschützt.

Zweckmäßigerweise ist die Abdeckhaube mit den einzelnen Wägezellengehäusen verbindbar, wobei das Oberteil bevorzugt auf einem Abschnitt der Oberseite der einzelnen Wägezellengehäuse abdichtend aufliegt. Daraus ergeben sich mehrere Vorteile. Einerseits wird durch den abdichtenden Kontakt zwischen der Unterseite des Abdeckungsoberteils und der Oberseite der einzelnen Wägezellengehäuse sichergestellt, dass eventuell in die jeweilige Durchlassöffnung eindringende Verunreinigungen nicht in den Raum zwischen Abdeckhaube und Außenseite des Wägezellengehäuses gelangen können. Andererseits wird der vertikale Abstand zwischen den Gehäuseöffnungen der einzelnen Wägezellengehäuse und den zugehörigen Durchlassöffnungen im Oberteil der Abdeckhaube auf ein Mindestmaß reduziert.

Die erfindungsgemäße Abdeckhaube gestattet die Anordnung von wenigstens zwei Wägezellengehäusen, die gemeinsam von der Abdeckhaube abgedeckt werden. Vorteilhafterweise kann die erfindungsgemäße Abdeckung auch Wägezellengehäuse gemeinsam abdecken, die zueinander nicht unmittelbar bzw. eng benachbart positioniert sind, wobei dann zugleich der zwischen den Wägezellengehäusen bestehende Zwischenraum mit abgedeckt und gegen Verunreinigung geschützt ist.

Eine besonders vorteilhafte Ausführungsform der Erfindung betrifft eine Anordnung mehrerer Wägezellengehäuse, die mit der Abdeckhaube nicht nur gemeinsam abgedeckt, sondern jeweils mit ihr verbunden sind. Dies geschieht mit Hilfe einer Hülse für jedes Wägezellengehäuse, welche sowohl durch die jeweilige Gehäuseöffnung des Wägezellengehäuses als auch durch die zugehörige Durchlassöffnung des Oberteils hindurch ragt. An der Hülse angreifende Befestigungsmittel fixieren dabei das Oberteil der Abdeckung und das jeweilige Wägezellengehäuse zueinander.

Als Befestigungsmittel kommt insbesondere ein an sich bekannter Labyrinthring infrage, der das Eindringen von Verunreinigungen in die Durchlassöffnung und insbesondere die Gehäuseöffnung der jeweiligen Wägezelle zusätzlich erschweren soll. Der Labyrinthring ist vorzugsweise auf ein Außengewinde der Hülse aufschraubbar. Alternativ kann er auch einteilig mit der Hülse ausgebildet sein.

Die erfindungsgemäße Anordnung lässt sich montieren, indem an einigen oder allen Wägezellengehäusen die jeweilige Hülse zunächst an bzw. in der Gehäuseöffnung der jeweiligen Wägezelle befestigt wird, beispielsweise durch Einschrauben in ein dort vorgesehenes Innengewinde. Ein an der Hülse angebrachter Flansch kann dazu dienen, die Einschraubhöhe zu definieren und zugleich einen formschlüssigen Anschlag zwischen Hülse und Wägezellengehäuse zu erzeugen. Zugleich kann die Hülse in bzw. an dem Wägezellengehäuse gegen unbeabsichtigtes Lösen gesichert werden. Dies kann beispielsweise geschehen durch Kleben oder ein kraft- und/oder formschlüssig auf die Hülse einwirkendes Sicherungsmittel (Schraube, Sicherungsstift, selbstsichernde Mutter etc.), welches zugleich am Wägezellengehäuse angreift.

Nach Montage der Hülse an (vorzugsweise) allen Wägezellengehäusen lässt sich die erfindungsgemäße Abdeckhaube so auf die Wägezellengehäuse aufsetzen, dass die jeweiligen Hülsen die zugehörigen Durchlassöffnungen des Oberteils durchragen. Die innerhalb der einzelnen Hülsen aus den Wägezellengehäusen nach oben ragenden Lasteinleitungsbolzen sind dann von außerhalb der Abdeckhaube zugänglich, während die Gruppe der Wägezellengehäuse ansonsten vollständig von der Abdeckhaube abgedeckt ist. Zur Befestigung der Abdeckhaube werden die vorzugsweise als Labyrinthringe ausgebildeten Befestigungsmittel anschließend an dem durch die Abdeckung nach oben hindurch ragenden Abschnitt der jeweiligen Hülsen befestigt, zweckmäßigerweise durch Aufschrauben. Dabei ist der Durchmesser der jeweiligen Durchlassöffnung (vorzugsweise geringfügig) größer als der Außendurchmesser der jeweiligen Hülse und zugleich kleiner als der wirksame Außendurchmesser des Labyrinthringes zu wählen, sodass der Labyrinthring mit seiner Unterseite gegen die Oberseite des Oberteils wirkt. Liegt das Oberteil dabei auf einem Abschnitt des Wägezellengehäuses auf, so lässt es sich formschlüssig gegen das Wägezellengehäuse verspannen.

Ein besonderer Vorteil der erfindungsgemäßen Abdeckung besteht darin, dass sie kompatibel ausgebildet ist zu mehrspurigen Wägesystemen, bei denen die einzelnen Wägezellengehäuse von sich aus mit einer Hülse der vorgenannten Art und einem zugehörigen Labyrinthring als Befestigungsmittel ausgestattet sind. Im regulären Betrieb einer nicht erfindungsgemäß abgedeckten Wägezelle dient die Hülse lediglich dazu, auf der Oberseite des Wägezellengehäuses den Labyrinthring zu befestigen, der das Eindringen von Verunreinigungen in das Innere des Wägezellengehäuses verhindern soll. Die erfindungsgemäße Abdeckhaube lässt sich jedoch mit nur geringem Aufwand als gemeinsamer Schutz für eine Gruppe solcher Wägezellengehäuse durch ein einfaches Verfahren installieren bzw. vor Ort nachrüsten. Dies kann besonders vorteilhaft durch den Kunden bzw. Betreiber des Mehrspursystems selbst geschehen, ohne die Wägezellen aus ihren Einbaulagen herauszunehmen oder unzulässig öffnen zu müssen. Die Lage und Präzision der evtl. zuvor kalibrierten Wägezellen, ihre Gehäusedichtigkeit und ein bestehender EMV-Schutz bleiben vor, während und nach der Montage der Abdeckhaube unverändert aufrecht erhalten.

Dabei werden lediglich die Labyrinthringe der einzelnen Wägezellengehäuse vorübergehend entfernt (abgeschraubt), um die Abdeckhaube mit ihren passenden Durchlassöffnungen auf die Wägezellenanordnung aufzusetzen, wonach die einzelnen Labyrinthringe wieder auf die durch die Durchlassöffnungen hindurch ragenden Hülsen aufzuschrauben sind. Die Wägezellen bzw. Wägezellengehäuse und insbesondere auch zwischen ihnen bestehende Spalte und Zwischenräume sind dann gut gegen Verunreinigung geschützt.

Vorzugsweise ist die erfindungsgemäße Abdeckhaube so gestaltet, dass eine Anzahl von Durchlassöffnungen über Blinddeckel verschließbar ist für den Fall, dass nicht jede Durchlassöffnung benötigt wird. Alternativ oder ergänzend kann die Abdeckhaube auch dazu ausgebildet sein, je nach räumlicher Position der Lasteinleitungsbolzen vor Ort einzelne Durchlassöffnungen gezielt in das Oberteil einzubringen, etwa indem kreisförmige oder sonstige Materialabschnitte über Sollbruchstellen aus dem Oberteil herausgelöst werden. So lässt sich die Abdeckhaube flexibel einsetzen für unterschiedliche Anordnungen von Wägezellengehäusen, sei es eng zueinander benachbart oder mit größerem Zwischenabstand.

Vorzugsweise umfasst eine Anordnung aus Wägezellengehäusen und Abdeckhaube zusätzlich Dichtmittel, die bevorzugt zwischen dem Labyrinthring und dem Oberteil der Abdeckhaube wirken. So könnte ein O-Ring in eine Ringnut an der Unterseite eines Labyrinthringes eingesetzt werden, der nach dem Aufschrauben auf die Hülse bzw. bei Kontakt mit der Oberseite des Oberteils zusätzlich abdichtet.

Die Abdeckhaube kann die Anordnung der Wägezellengehäuse auch seitlich vollständig abdecken, um das Eindringen von Verschmutzung auch von der Seite zu verhindern. Dazu reichen die Seitenwände der Abdeckhaube vorzugsweise herab bis auf eine Grundplatte, auf der die Wägezellen angeordnet sind. Alternativ kann der seitliche Schutz aber auch oberhalb einer solchen Grundplatte enden.

Vorzugsweise besteht zwischen der Innenseite der Abdeckhaube und einer oder mehrere Außenseiten der Wägezellengehäuse ein vorgebbarer Abstand zur Bildung eines Luftspalts. Dies verbessert die thermische Isolierung der innerhalb der Abdeckhaube angeordneten Wägezellen gegenüber der Umgebung.

Eine Ausführungsform einer erfindungsgemäßen Anordnung aus Abdeckhaube und Wägezellengehäusen soll nachfolgend anhand eines Figurenbeispiels näher erläutert werden. Dabei zeigt
- Fig. 1: eine vergrößerte Schnittdarstellung der Anordnung im Bereich des Lasteinleitungsbolzens, und
- Fig. 2 (a und b): zwei erfindungsgemäße Anwendungsfälle.

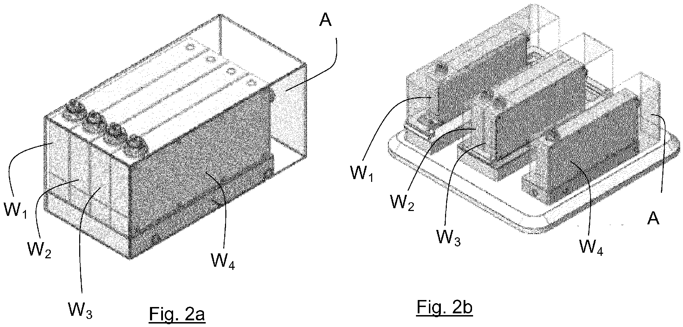

Wie sich aus der Übersicht in Fig. 2a oder Fig. 2b ergibt, ist eine Anordnung mehrerer eng beieinander positionierter Wägezellengehäuse W₁, W₂, W₃, W₄ von einer gemeinsamen Abdeckhaube A abgedeckt. Die zwischen den einzelnen Wägezellengehäusen bestehenden Spalte oder Zwischenräume sind durch die gemeinsame Abdeckhaube vollständig gegenüber der Umgebung abgedeckt.

Während in Fig. 2a die einzelnen Wägezellengehäuse unmittelbar benachbart zueinander angeordnet sind und nur schmale Spalte zwischen sich ausbilden, sind die Wägezellengehäuse gemäß Fig. 2b teilweise mit größerem Abstand zueinander positioniert. Dennoch überdeckt die (in Fig. 2b teilweise unterbrochen dargestellte) Abdeckhaube A alle Wägezellengehäuse gemeinsam und schützt so Spalte und größere Zwischenräume gleichermaßen gegen das Eindringen von Verunreinigungen.

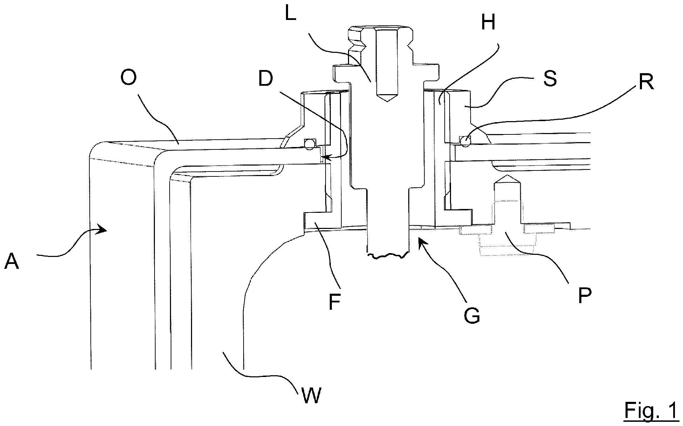

Fig. 1 zeigt eine schematische Detailansicht der Anordnungen gemäß Fig. 2. Ein Wägezellengehäuse W weist dabei eine Gehäuseöffnung G auf, durch welche ein Lasteinleitungsbolzen L bis auf die Außenseite des Gehäuses W hindurchragt. Die Gehäuseöffnung G weist ein nicht näher bezeichnetes Innengewinde auf, in welches eine mit einem passenden Außengewinde versehene Hülse H von unten eingeschraubt ist. Ein am hinteren (unteren) Ende der Hülse H angeordneter Flansch F wirkt dabei mit einer komplementären Anschlagfläche des Wägezellengehäuses W zusammen, wenn die endgültige Einschraubposition der Hülse H erreicht ist.

Über das Wägezellengehäuse W und die daraus nach oben hervorragende Hülse H bzw. den Lasteinleitungsbolzen L ist eine Abdeckhaube A übergestülpt, die in einem Oberteil O eine Durchlassöffnung D aufweist. Die Durchlassöffnung D ist geringfügig größer gewählt als der Außendurchmesser der Hülse H. Die Unterseite des Oberteils O liegt auf einer nicht näher bezeichneten Oberseite des Wägezellengehäuses W plan auf und dichtet dadurch den schmalen Raum zwischen der Außenseite des Wägezellengehäuses W und der Innenseite der Abdeckhaube A ab.

Ein vereinfacht dargestellter Labyrinthring S ist von oben auf das nach oben ragende Ende der Hülse H aufgeschraubt bis zur Anlage an der Oberseite des Oberteils O. Da die Hülse H mit ihrem Flansch F an der Innenseite des Wägezellengehäuses W anliegt, vermag der Labyrinthring S beim Aufschrauben auf das Außengewinde der Hülse H eine Andruckkraft zwischen der Unterseite des Labyrinthrings S und der Oberseite des Oberteils O zu erzeugen, die zugleich das Oberteil O auf die Oberseite des Wägezellengehäuses W presst.

Zur Erzielung einer verbesserten Dichtwirkung ist auf der Unterseite des Labyrinthringes S eine umlaufende Nut eingebracht, in der ein O-Ring R angeordnet ist, um den Spalt zwischen dem Labyrinthring S und dem Oberteil O zusätzlich abzudichten.

Eine in die Innenseite des Wägezellengehäuses W eingebrachte Sicherungsschraube P beaufschlagt mit einer flanschartigen Erweiterung die Unterseite des Flansches F der Hülse H. Auf diese Weise ist sichergestellt, dass sich die Hülse H nicht ungewollt aus der Gehäuseöffnung G löst oder relativ dazu verdreht.

### Bezugszeichenliste

- A: Abdeckhaube
- D: Durchlassöffnung
- F: Flansch
- G: Gehäuseöffnung
- H: Hülse
- L: Lasteinleitungsbolzen
- O: Oberteil
- P: Sicherungsschraube
- R: Dichtung
- S: Labyrinthring
- W: Wägezellengehäuse

## Patentansprüche

1. Abdeckhaube (A) zur gemeinsamen Abdeckung mehrerer Wägezellengehäuse (W₁, W₂...), wobei aus jedem Wägezellengehäuse (W₁, W₂...) ein Lasteinleitungsbolzen (L₁, L₂...) durch eine Gehäuseöffnung (G₁, G₂) hindurchragt,
wobei in einem Oberteil (O) der Abdeckhaube (A) für jeden Lasteinleitungsbolzen (L₁, L₂...) eine eigene Durchlassöffnung (D₁, D₂...) vorgesehen ist
**dadurch gekennzeichnet,**
**dass** die Abdeckhaube (A) mit den einzelnen Wägezellengehäusen (W₁, W₂...) verbindbar ist.

2. Abdeckhaube (A) nach Anspruch 1, **dadurch gekennzeichnet, dass** die Abdeckhaube (A) so mit den einzelnen Wägezellengehäusen (W₁, W₂...) verbindbar ist, dass das Oberteil (O) auf einem Abschnitt der Oberseite der einzelnen Wägezellengehäuse (W₁, W₂...) abdichtend aufliegt.

3. Anordnung von wenigstens zwei Wägezellengehäusen (W₁, W₂...), die von einer Abdeckhaube nach Anspruch 1 oder 2 abgedeckt sind.

4. Anordnung nach dem vorhergehenden Anspruch, **dadurch gekennzeichnet, dass** jedes Wägezellengehäuse (W₁, W₂...) mit der Abdeckhaube (A) verbunden ist, in dem jeweils eine Hülse (H₁, H₂...) durch die jeweilige Gehäuseöffnung (G₁, G₂...) und die jeweilige Durchlassöffnung (D₁, D₂...) ragt, wobei an der Hülse angreifende Befestigungsmittel (S₁, S₂...) das Oberteil (O) und das jeweilige Wägezellengehäuse (W₁, W₂...) relativ zueinander fixieren.

5. Anordnung nach dem vorhergehenden Anspruch, **dadurch gekennzeichnet, dass** das Befestigungsmittel ein Labyrinthring (S₁, S₂...) ist, der auf der dem Wägezellengehäuse (W₁, W₂...) abgewandten Oberseite der Oberteils (O) auf ein Außengewinde der Hülse (H₁, H₂...) aufschraubbar oder einteilig mit der Hülse (H₁, H₂...) ausgebildet ist.

6. Anordnung nach einem der Ansprüche 3 bis 5, **dadurch gekennzeichnet, dass** an der Gehäuseöffnung (G₁, G₂...) ein Innengewinde vorgesehen ist, in welches die Hülse (H₁, H₂...) über ein an ihr vorgesehenes Außengewinde einschraubbar ist.

7. Anordnung nach einem der Ansprüche 3 bis 6, **dadurch gekennzeichnet, dass** eine mit dem jeweiligen Wägezellengehäuse (W₁, W₂...) verbundene Hülse (H₁, H₂...) über Sicherungsmittel (P) gegen unbeabsichtigtes Lösen vom Wägezellengehäuse (W₁, W₂...) gesichert ist.

8. Anordnung nach einem der Ansprüche 3 bis 7, **dadurch gekennzeichnet, dass** die Hülse (H₁, H₂...) einen mit dem Wägezellengehäuse (W₁, W₂...) zusammenwirkenden Flansch (F) aufweist, um die Lage der Hülse (H₁, H₂...) relativ zum Wägezellengehäuse (W₁, W₂...) genau vorgeben zu können, wobei der Flansch (F) einstückig mit der Hülse (H₁, H₂...) oder als an der Hülse fixierbarer bzw. auf die Hülse (H₁, H₂...) aufschraubbarer Ring ausgebildet ist.

9. Anordnung nach einem der Ansprüche 3 bis 8, **dadurch gekennzeichnet, dass** ein als Befestigungsmittel dienender Labyrinthring (S₁, S₂...) auf seiner dem Oberteil (O) zugewandten Unterseite Dichtmittel, insbesondere einen vorzugsweise in einer Nut verlaufenden O-Ring, aufweist.

## Claims

1. A covering hood (A) for jointly covering a plurality of load cell housings (W₁, W₂...), wherein a load induction pin (L₁, L₂...) passes out of each weighing cell housing (W₁, W₂...) through an opening in the housing (G₁, G₂),
wherein a separate outlet opening (D₁, D₂...) for each load induction pin (L₁, L₂...) is provided in a top part (O) of the covering hood (A)
**characterized in that**
the covering hood (A) can be connected to the individual load cell housings (W₁, W₂...).

2. The covering hood (A) according to claim 1, **characterized in that** the covering hood (A) can be connected to the individual load cell housings (W₁, W₂...) in such a way that the top part (O) rests with a seal on a section of the top side of the individual load cell housings (W₁, W₂...).

3. A configuration of at least two load cell housings (W₁, W₂...), which are covered by a covering hood according to claim 1 or 2.

4. The configuration according to the preceding claim, **characterized in that** each load cell housing (W₁, W₂...) is connected to the covering hood (A), in which a sleeve (H₁, H₂...) protrudes through the respective opening in the housing (G₁, G₂...) and through the respective outlet opening (D₁, D₂...), wherein fastening means (S₁, S₂...) that act on the sleeve can secure the top part (O) and the respective load cell housing (W₁, W₂...) in relation to one another.

5. The configuration according to the preceding claim, **characterized in that** the fastening means is a labyrinth ring (S₁, S₂...), which can be screwed onto an outside thread of the sleeve (H₁, H₂...) on the top side of the top part (O) facing away from the load cell housing (W₁, W₂...) or is designed in one piece with the sleeve (H₁, H₂...).

6. The configuration according to any one of claims 3 to 5, **characterized in that** an inside thread into which the sleeve (H₁, H₂...) can be screwed via an outside thread provided thereon is provided on the opening in the housing (G₁, G₂...).

7. The configuration according to any one of claims 3 to 6, **characterized in that** a sleeve (H₁, H₂...) connected to the respective load cell housing (W₁, W₂...) is secured by securing means (P) to prevent unintended loosening from the load cell housing (W₁, W₂...).

8. The configuration according to any one of claims 3 to 7, **characterized in that** the sleeve (H₁, H₂...) has a flange (F) that cooperates with the load cell housing (W₁, W₂...) to be able to precisely predetermine the position of the sleeve (H₁, H₂...) in relation to the load cell housing (W₁, W₂...), wherein the flange (F) is designed in one piece with the sleeve (H₁, H₂...) or as a ring that can be secured on the sleeve and/or can be screwed onto the sleeve (H₁, H₂...).

9. The configuration according to any one of claims 3 to 8, **characterized in that** a labyrinth ring (S₁, S₂...), which functions as a fastening means, has sealing means, in particular an O-ring, which preferably runs in a groove on its bottom side facing the top part (0).

## Revendications

1. Capot (A) permettant de recouvrir conjointement plusieurs boîtiers de cellule de pesage (W₁, W₂, ...), un boulon d'application de charge (L₁, L₂, ...) faisant saillie à partir de chaque boîtier de cellule de pesage (W₁, W₂, ...) à travers une ouverture de boîtier (G₁, G₂),
dans lequel, dans une partie supérieure (O) du capot (A), une ouverture de passage (D₁, D₂, ...) particulière est prévue pour chaque boulon d'application de charge (L₁, L₂, ...),
**caractérisé en ce que** le capot (A) peut être relié aux boîtiers de cellule de pesage (W₁, W₂, ...) individuels.

2. Capot (A) selon la revendication 1, **caractérisé en ce que** le capot (A) peut être relié aux boîtiers de cellule de pesage (W₁, W₂, ...) individuels de telle sorte que la partie supérieure (O) repose de manière étanche sur une portion de la surface supérieure des boîtiers de cellule de pesage (W₁, W₂, ...) individuels.

3. Agencement composé d'au moins deux boîtiers de cellule de pesage (W₁, W₂, ...) recouverts par un capot selon la revendication 1 ou 2.

4. Agencement selon la revendication précédente, **caractérisé en ce que** chaque boîtier de cellule de pesage (W₁, W₂, ...) est relié au capot (A) **en ce qu'**une douille (H₁, H₂, ...) respectivement fait saillie à travers l'ouverture de boîtier (G₁, G₂) respective et l'ouverture de passage (D₁, D₂, ...) respective, dans lequel des moyens de fixation (S₁, S₂, ...) attaquant au niveau de la douille fixent la partie supérieure (O) et le boîtier de cellule de pesage (W₁, W₂, ...) respectif l'une par rapport à l'autre.

5. Agencement selon la revendication précédente, **caractérisé en ce que** le moyen de fixation est une garniture en labyrinthe (S₁, S₂, ...) qui peut être vissée sur la surface supérieure de la partie supérieure (O), détournée du boîtier de cellule de pesage (W₁, W₂, ...), sur un filetage de la douille (H₁, H₂, ...) ou qui peut être réalisée d'une seule pièce avec la douille (H₁, H₂, ...).

6. Agencement selon l'une quelconque des revendications 3 à 5, **caractérisé en ce qu'**un taraudage est prévu au niveau de l'ouverture de boîtier (G₁, G₂, ...) dans lequel la douille (H₁, H₂, ...) peut être vissée par l'intermédiaire d'un filetage prévu sur celle-ci.

7. Agencement selon l'une quelconque des revendications 3 à 6, **caractérisé en ce qu'**une douille (H₁, H₂, ...) reliée au boîtier de cellule de pesage (W₁, W₂, ...) respectif est bloquée à l'aide de moyens de blocage (P) contre un déblocage non intentionnel du boîtier de cellule de pesage (W₁, W₂, ...).

8. Agencement selon l'une quelconque des revendications 3 à 7, **caractérisé en ce que** la douille (H₁, H₂, ...) présente une bride (F) coopérant avec le boîtier de cellule de pesage (W₁, W₂, ...) afin de pouvoir spécifier avec précision la position de la douille (H₁, H₂) par rapport au boîtier de la position, la bride (F) étant réalisée d'une seule pièce avec la douille (H₁, H₂, ...) ou sous forme d'anneau pouvant être fixé à la douille ou pouvant être vissé sur la douille (H₁, H₂, ...).

9. Agencement selon l'une quelconque des revendications 3 à 8, **caractérisé en ce qu'**une garniture en labyrinthe (S₁, S₂, ...) servant de moyen de fixation présente sur sa surface inférieure, tournée vers la partie supérieure (O), des moyens d'étanchéité, en particulier un joint torique s'étendant de préférence dans une rainure.
